# EUROPÄISCHE PATENTSCHRIFT

(11) **EP 0 826 741 B1**
(45) Veröffentlichungstag und Bekanntmachung des Hinweises auf die Patenterteilung: **18.10.2000**
(21) Anmeldenummer: 97810581.5
(22) Anmeldetag: 19.08.1997
(51) Int. Cl.: C09B 29/085, C09B 29/01

(54) **Dispersionsfarbstoffe**
Disperse dyes
Colorants de dispersion

(30) Priorität: 26.08.1996 CH 208896
(43) Veröffentlichungstag der Anmeldung: 04.03.1998
(73) Patentinhaber: Ciba Specialty Chemicals Holding Inc., 4057 Basel (CH)
(72) Erfinder: Herzig, Paul, 4057 Basel (CH); Clément, Antoine, 4058 Basel (CH)

(56) Entgegenhaltungen:
- EP-A- 0 555 179
- EP-A- 0 563 975
- EP-A- 0 623 654
- CH-A- 435 500
- FR-A- 2 289 549
- GB-A- 2 030 169
- US-A- 2 373 700
- DATABASE WPI Week 8043 Derwent Publications Ltd., London, GB; AN 80-75850C[43] XP002048294 "Mfg. mono-azo-cpd. for dyeing synthetic fibre" & JP 55 116 754 (MITSUI TOATSU CHEM. INC.) & JP 55 116 754 A

## Beschreibung

Gegenstand der vorliegenden Erfindung sind Dispersionsfarbstoffe, Verfahren zu deren Herstellung sowie ihre Verwendung zum Färben oder Bedrucken von halbsynthetischen oder synthetischen hydrophoben Fasermaterialien.

Dispersionsfarbstoffe, d.h. Farbstoffe, welche keine wasserlöslichmachenden Gruppen enthalten, sind seit langem bekannt und werden zum Färben von hydrophoben Textilmaterial verwendet. Vielfach sind die erhaltenen Färbungen jedoch nicht ausreichend thermomigrierecht. Dieses Problem tritt vor allem bei roten bis braunen Nuancen auf.

Gegenstand der vorliegenden Erfindung sind nun Dispersionsfarbstoffe, welche sehr thermomigrierechte Färbungen ergeben, aber trotzdem sowohl im Auszieh- und Thermosolverfahren als auch im Textildruck ein gutes Aufbauvermögen besitzen. Die Farbstoffe sind auch für r den Ätzdruck geeignet.

Die erfindungsgemässen Farbstoffe entsprechen der Formel 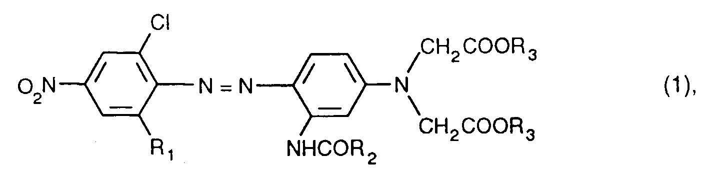 worin
R₁ Chlor oder Brom,
R₂ Methyl oder Ethyl, und
R₃ Methyl oder Ethyl sind.

Als R₁ ist Chlor bevorzugt.
Als R₂ ist Methyl bevorzugt.
Als R₃ ist Methyl bevorzugt.

Besonders bevorzugt ist der Farbstoff der Formel

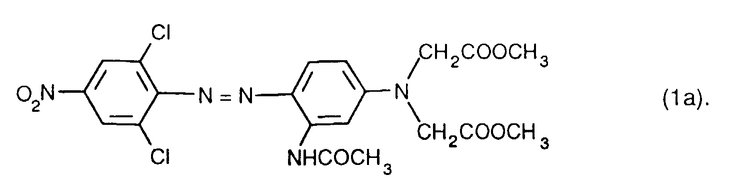

Die Farbstoffe der Formel (1) können nach an sich bekannten Verfahren hergestellt werden. Man erhält sie beispielsweise, indem man eine Verbindung der Formel 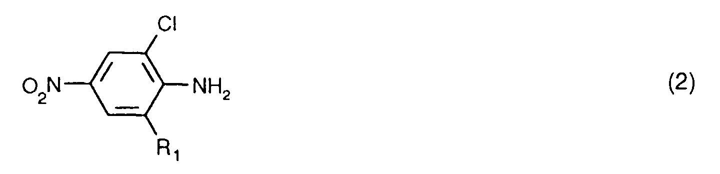 diazotiert und auf eine Kupplungskomponente der Formel 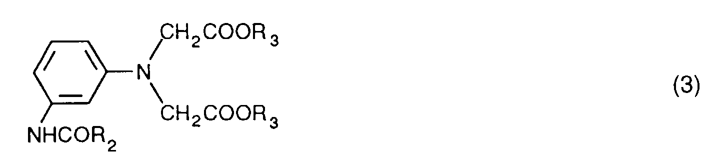 kuppelt, wobei R₁, R₂, und R₃ die unter der Formel (1) angegebenen Bedeutungen aufweisen.

Die Diazotierung der Verbindungen der Formel (2) erfolgt in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Phosphorsäure und Essigsäure. Zweckmässig wird die Diazotierung bei Temperaturen von -10 bis 30° C, vorzugsweise von -10° C bis Raumtemperatur, durchgeführt.

Die Kupplung der diazotierten Verbindung der Formel (2) auf die Kupplungskomponente der Formel (3) erfolgt ebenfalls in bekannter Weise, beispielsweise in saurem, wässrigem oder wässrig-organischem Medium, vorteilhaft bei Temperaturen von -10 bis 30° C, insbesondere unter 10° C. Als Säuren verwendet man z.B. Salzsäure, Essigsäure, Schwefelsäure oder Phosphorsäure. Diazotierung und Kupplung können beispielsweise im gleichen Reaktionsmedium durchgeführt werden.

Die Diazokomponenten der Formel (2) und die Kupplungskomponenten der Formel (3) sind bekannt oder können auf an sich bekannte Art und Weise hergestellt werden.

Die erfindungsgemässen Farbstoffe der Formel (1) können zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Fasermaterialien enthalten, können ebenfalls mit Hilfe der erfindungsgemässen Farbstoffe gefärbt oder bedruckt werden.

Die EP-A-0 555 179 beschreibt u.a. sehr ähnliche Monoazodispersionsfarbstoffe, die insbesondere zum Färben von Polyesterfasern geeignet sind.

Als halbsynthetische Textilmaterialien kommen vor allem Cellulose-2½-Acetat und Cellulosetriacetat in Frage.

Synthetische hydrophobe Textilmaterialien bestehen vor allem aus linearen, aromatischen Polyestem, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4'-dihydroxy-diphenylmethan und Phosgen, aus Fasern auf Polyvinylchlorid- sowie Polyamid-Basis.

Die Applikation der erfindungsgemässen Farbstoffe auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nichtionischen Dispergiermitteln und gegebenenfalls üblichen Quellmitteln (Carrier) bei Temperaturen zwischen 80 und 140°C. Cellulose-2½-acetat färbt man vorzugsweise zwischen ungefähr 65 bis 85°C und Cellulosetriacetat bei Temperaturen bis zu 115° C.

Die erfindungsgemässen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich zum Färben nach dem Thermosolverfahren, im Ausziehverfahren und für Druckverfahren. Das Ausziehverfahren ist bevorzugt. Das Flottenverhältnis ist von den apparativen Gegebenheiten, vom Substrat und der Aufmachungsform abhängig. Es kann jedoch innerhalb eines weiten Bereiches gewählt werden, z.B. 1:4 bis 1:100, liegt aber vorzugsweise zwischen 1:6 bis 1:25.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkemmehl, Tragant, Carboxymethylcellulose, Hydroxyethylcellulose, Stärke oder synthetische Produkte, beispielsweise Polyacrylamide, Polyacrylsäure oder deren Copolymere, oder Polyvinylalkohole.

Die erfindungsgemässen Farbstoffe verleihen den genannten Materialien, vor allem dem Polyestermaterial, egale braune Farbtöne von sehr guten Gebrauchsechtheiten, wie guter Lichtechtheit und guter Sublimierechtheit. Hervorzuheben ist die sehr gute Waschechtheit und vor allem Thermomigrierechtheit. Die erfindungsgemässen Farbstoffe zeichnen sich femer durch einen guten Auszug und Aufbau aus.

Die erfindungsgemässen Farbstoffe können auch gut verwendet werden zur Herstellung von Mischnuancen zusammen mit anderen Farbstoffen.

Die vorstehend genannten Verwendungen der erfindungsgemässen Farbstoffe stellt ebenso einen Gegenstand der vorliegenden Erfindung dar, wie ein Verfahren zum Färben oder Bedrucken von halbsynthetischem oder synthetischem hydrophobem Fasermaterial, insbesondere Textilmaterial, das darin besteht die erfindungsgemässen Farbstoffe auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Farbstoffe zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die erfindungsgemässen Farbstoffe der Formel (1) eignen sich ausserdem für moderne Aufzeichnungsverfahren, wie z.B. Thermotransfer-Printing.

Die nachfolgenden Beispiele dienen der Veranschaulichung der Erfindung. Darin sind, sofern nicht anders angegeben, die Teile Gewichtsteile und die Prozente Gewichtsprozente. Die Temperaturen sind in Celsiusgraden angegeben. Die Beziehung zwischen Gewichtsteilen und Volumenteilen ist dieselbe wie zwischen Gramm und Kubikzentimeter.

### Beispiel 1:

41,4 Gewichtsteile 2,6-Dichlor-4-nitroanilin werden bei einer Temperatur von 20 bis 30° C in 138 Gewichtsteile einer 92%-igen Schwefelsäure eingetragen. Das Reaktionsgemisch wird bei 30° C so lange gerührt, bis eine klare Lösung entsteht. Danach werden innerhalb 20 Minuten 63,5 Gewichtsteile Nitrosylschwefelsäure zum Reaktionsgemisch zugetropft und 90 Minuten bei 25 bis 30° C nachgerührt. Die entstandene Diazolösung wird anschliessend innerhalb 90 Minuten zu einer Lösung aus 61,7 Gewichtsteilen (N-3-Acetamino-phenyl)-N-methoxycarbonylmethyl-aminoessigsäuremethylester in 130 Gewichtsteilen Essigsäure zugetropft, wobei die Reaktionstemperatur durch Zugabe von Eis bei 5 bis 15° C gehalten wird. Nach der beendeten Zugabe der Diazolösung wird das Gemisch 1 Stunde nachgerührt.
Danach werden innerhalb 50 Minuten 370 Gewichtsteile einer 30%-igen wässrigen NaOH-Lösung zugetropft, wobei die Temperatur durch Eiszugabe bei 40° C gehalten wird. Der entstandene Niederschlag wird abgenutscht und mit Wasser gewaschen. Nach dem Trocknen erhält man 101 Gewichtsteile eines braunen Farbstoffes der Formel (1a) mit einem Schmelzpunkt von 170-173° C, der Textilmaterial aus Polyester in braunen Farbtönen mit guten Echtheiten, insbesondere Thermomigrierechtheit und Lichtechtheit, färbt.

### Beispiele 2 - 8:

Analog der im Beispiel 1 angegebenen Vorschrift lassen sich die in der Tabelle 1 aufgeführten Farbstoffe herstellen. Sie färben ebenfalls das Textilmaterial aus Polyester in braunen Farbtönen mit guten Echtheiten, insbesondere Thermomigrierechtheit und Lichtechtheit.

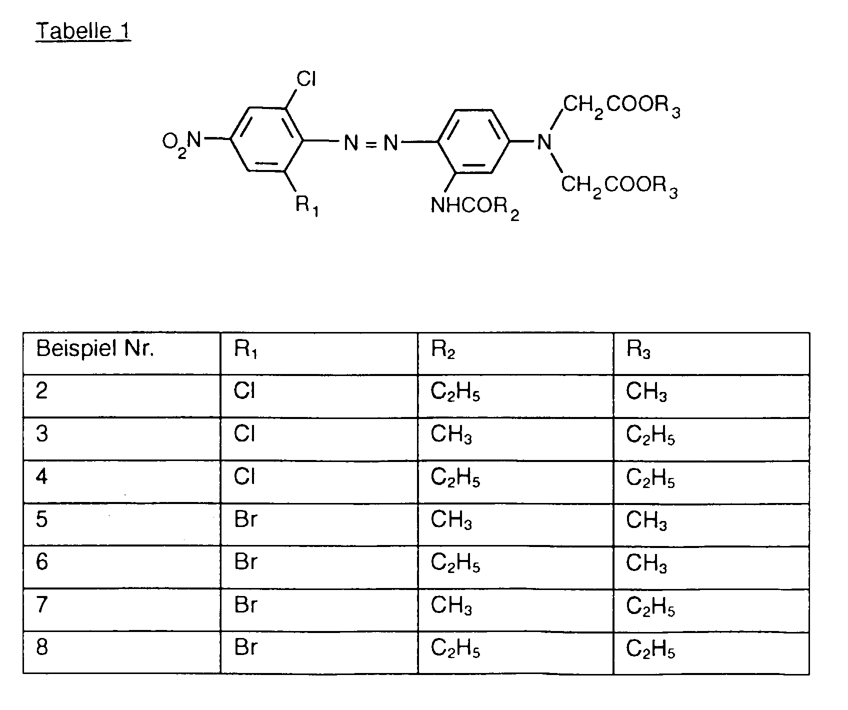

## Patentansprüche

1. Farbstoffe der Formel 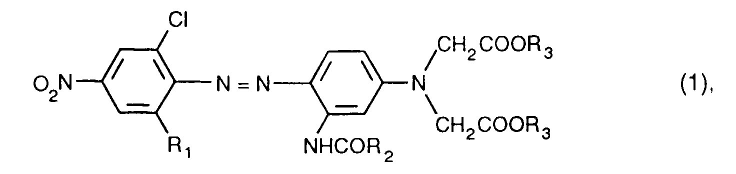 worin
R₁ Chlor oder Brom,
R₂ Methyl oder Ethyl, und
R₃ Methyl oder Ethyl sind.

2. Farbstoffe gemäss Anspruch 1, worin R₁ Chlor ist.

3. Farbstoffe gemäss Anspruch 1 oder 2, worin R₂ Methyl ist.

4. Farbstoffe gemäss einem der Ansprüche 1 bis 3, worin R₃ Methyl ist.

5. Farbstoff gemäss Anspruch 1 der Formel

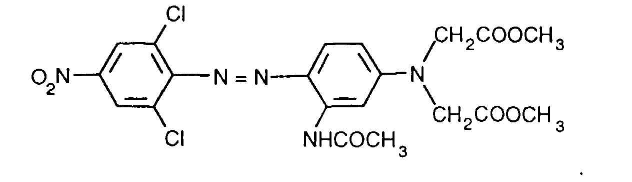

6. Verfahren zur Herstellung von Farbstoffen der Formel (1) gemäss Anspruch 1, dadurch gekennzeichnet, dass man eine Verbindung der Formel 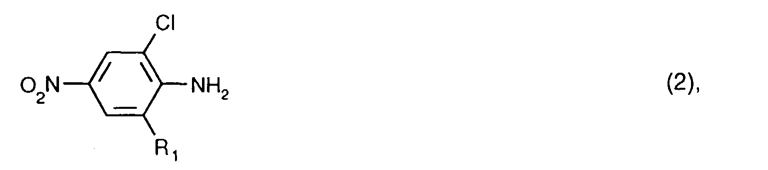 worin R₁ Chlor oder Brom ist diazotiert und auf eine Kupplungskomponente der Formel 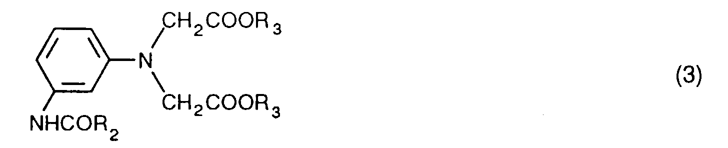 worin R₂ Methyl oder Ethyl, und R₃ Methyl oder Ethyl sind,
kuppelt.

7. Verwendung der Farbstoffe gemäss Anspruch 1 zum Färben oder Bedrucken von halbsynthetischem oder synthetischem hydrophobem Fasermaterial, insbesondere Textilmaterial.

8. Verwendung nach Anspruch 7 zum Färben oder Bedrucken von Textilmaterial aus Polyesterfasern.

9. Verfahren zum Färben oder Bedrucken von halbsynthetischem oder synthetischem hydrophobem Fasermaterial, insbesondere Textilmaterial, dadurch gekennzeichnet, dass man einen oder mehrere Farbstoffe gemäss Anspruch 1 auf das genannte Material aufbringt oder diesem einverleibt.

10. Verfahren nach Anspruch 9, worin das hydrophobe Material, vorzugsweise Textilmaterial, aus Polyesterfasern besteht.

11. Das gemäss Anspruch 9 oder 10 gefärbte oder bedruckte Material.

## Claims

1. A dye of formula 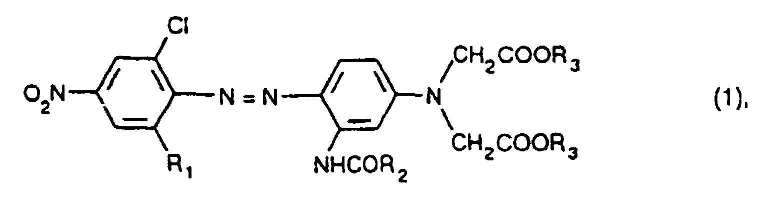 wherein
R₁ is chloro or bromo,
R₂ is methyl or ethyl, and
R₃ is methyl or ethyl.

2. A dye according to claim 1, wherein R₁ is chloro.

3. A dye according to claim 1 or claim 2, wherein R₂ is methyl.

4. A dye according to one of claims 1 to 3, wherein R₃ is methyl.

5. A dye according to claim 1 of formula

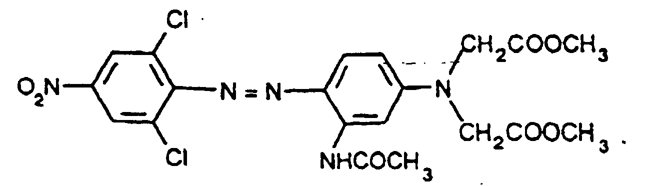

6. A process for the preparation of a dye of formula (1) according to claim 1, which comprises diazotising a compound of formula 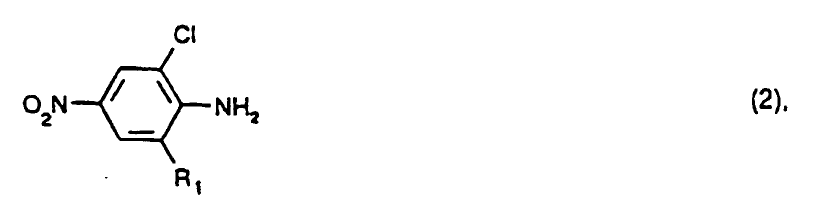 wherein R₁ is chloro or bromo, and coupling the diazonium salt of this compound to a coupling component of formula 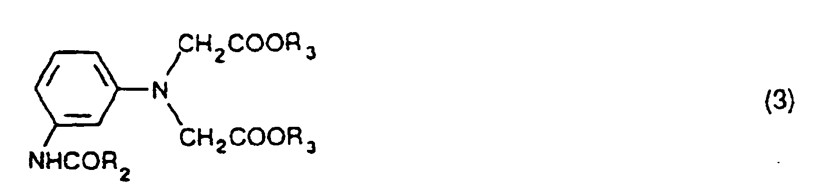 wherein R₂ is methyl or ethyl, and R₃ is methyl or ethyl.

7. The use of a dye according to claim 1 for dyeing or printing semi-synthetic or synthetic hydrophobic fibre material, especially textile material.

8. The use according to claim 7 for dyeing or printing polyester fibre textile material.

9. A process for dyeing or printing semi-synthetic or synthetic hydrophobic fibre material, especially textile material, which comprises applying to, or incorporating in, said material one or more than one dye according to claim 1.

10. A process according to claim 9, wherein the hydrophobic material, preferably textile material, consists of polyester fibres.

11. The material dyed or printed according to claim 9 or 10.

## Revendications

1. Colorant de formule 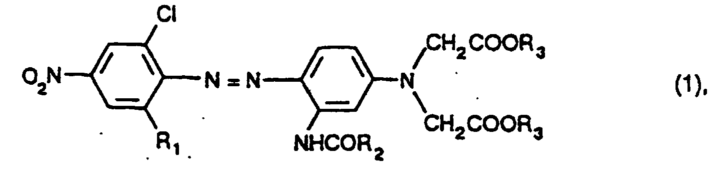 dans laquelle
R₁ représente un atome de chlore ou de brome,
R₂ représente un groupe méthyle ou éthyle, et
R₃ représente un groupe méthyle ou éthyle.

2. Colorant selon la revendication 1, dans lequel R₁ est un atome de chlore.

3. Colorant selon la revendication 1 ou 2 dans lequel R₂ est un groupe méthyle.

4. Colorant selon l'une des revendications 1 à 3, dans lequel R₃ est un groupe méthyle.

5. Colorant selon la revendication 1 de formule

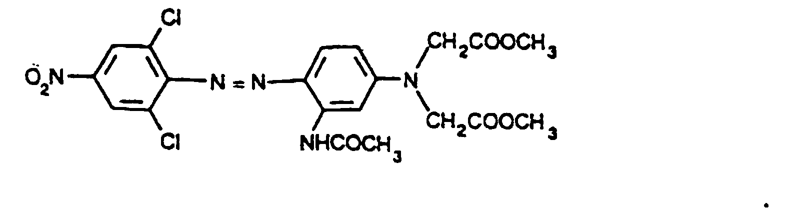

6. Procédé de préparation de colorants de formule (1) selon la revendication 1, caractérisé en ce qu'on réalise la diazotation d'un composé de formule 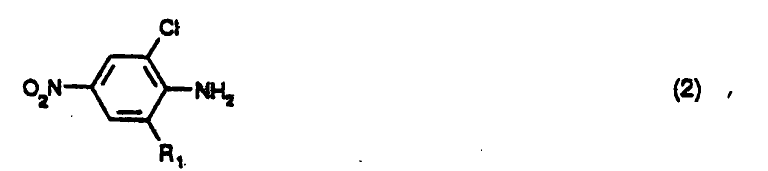 dans laquelle R₁ représente le chlore ou le brome et en copulant le produit obtenu sur un composé de copulation de formule 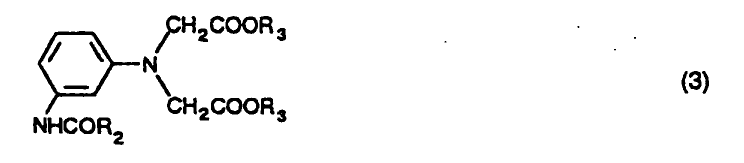 dans laquelle R₂ représente un groupe méthyle ou éthyle et R₃ représente un groupe méthyle ou éthyle.

7. Utilisation des colorants selon la revendication 1 pour la coloration ou l'impression d'un matériau en fibres hydrophobe semi-synthétique ou synthétique, en particulier d'un matériau textile.

8. Utilisation selon la revendication 7 pour la coloration ou l'impression d'un matériau textile de fibres de polyester.

9. Procédé pour la coloration ou l'impression d'un matériau en fibres hydrophobe semi-synthétique ou synthétique, en particulier d'un matériau textile, caractérisé en ce qu'on dépose un ou plusieurs colorants selon la revendication 1 sur le matériau mentionné ou qu'on les incorpore dans celui-ci.

10. Procédé selon la revendication 9, dans lequel le matériau hydrophobe, est de préférence constitué d'un matériau textile en fibres de polyester.

11. Matériau teinté ou imprimé selon la revendication 9 ou 10.
